# FASCICULE DE BREVET EUROPEEN

(11) **EP 0 829 580 B1**
(45) Date de publication et mention de la délivrance du brevet: **02.07.2003**
(21) Numéro de dépôt: 97402045.5
(22) Date de dépôt: 03.09.1997
(51) Int. Cl.: E01C 23/09

(54) **Machine pour réaliser des rainures dans le sol**
Vorrichtung zum Schneiden von Nuten im Boden
Apparatus for forming cuts in the ground

(30) Priorité: 16.09.1996 FR 9611248
(43) Date de publication de la demande: 18.03.1998
(73) Titulaire: GROUPE MARAIS, 49430 Durtal (FR)
(72) Inventeur: Perrot, Roger, 49330 Brissarthe (FR)
(74) Mandataire: Bonnetat, Christian

(56) Documents cités:
- DE-A- 3 022 317
- FR-A- 2 425 502
- FR-A- 2 626 908
- US-A- 3 566 932

## Description

La présente invention concerne une machine pour réaliser des rainures dans le sol.

Quoique non exclusivement, la machine conforme à l'invention est particulièrement appropriée à pratiquer des rainures dans des matières compressibles, relativement tendres, comme le revêtement des routes constitué généralement d'asphalte (à base de goudron ou bitume) ou matière analogue, pour y déposer, par exemple, des objets allongés tels que des câbles à fibres optiques et/ou électriques.

On connaît déjà, par exemple par les documents FR-A-2 425 502 et DE-A-30 22 317, des machines qui comportent un disque de coupe entraîné en rotation et porté par un châssis mobile. Lorsque le châssis se déplace, le disque de coupe rotatif attaque le sol et réalise progressivement dans celui-ci une ligne de coupe à la profondeur souhaitée.

De telles machines donnent des résultats souvent médiocres, quant à la réalisation de la ligne de coupe.

En effet, durant l'opération de coupe, la matière (revêtement d'asphalte) est évacuée sur la surface du sol, respectivement de part et d'autre du disque rotatif, laissant ainsi des dépôts de matière des deux côtés du disque, ce qui nécessite par la suite une opération de récupération des dépôts, toujours fastidieuse et coûteuse.

De plus, par la nature même de la matière coupée, les bords de la ligne de coupe sont souvent irréguliers et arrachés, si bien qu'on obtient une ligne de coupe de qualité médiocre.

Par ailleurs, lorsque le disque de coupe présente à sa périphérie des dents, celles-ci se détériorent à l'usage, ce qui conduit à remplacer le disque de coupe relativement fréquemment.

La présente invention a pour but de remédier à ces inconvénients.

A cet effet, la machine pour réaliser des rainures dans le sol, comportant :
- un châssis se composant d'une partie fixe et d'une partie mobile, reliées l'une à l'autre ;
- un disque rotatif, monté libre en rotation sur ladite partie mobile dudit châssis, l'entraînement en rotation dudit disque étant assuré par le contact de celui-ci avec le sol ; et
- une base d'appui montée sur ladite partie mobile,
est remarquable en ce que :
- ladite partie fixe est apte à être fixée au châssis d'un véhicule ;
- lesdites parties fixe et mobile sont articulées l'une à l'autre et reliées par des moyens d'actionnement permettant à ladite partie mobile de prendre par rotation soit une position abaissée, soit une position relevée ;
- ladite base d'appui est disposée orthogonalement au plan dudit disque et est pourvue d'un espace longitudinal à travers lequel peut passer un segment dudit disque pour réaliser ladite rainure, les bords latéraux dudit espace longitudinal étant proches des faces latérales dudit disque et ladite base d'appui empêchant l'évacuation de la matière de la rainure vers l'extérieur ; et
- en position abaissée de ladite partie mobile, ladite base d'appui et ledit disque sont appliqués avec pression contre le sol par l'action desdits moyens d'actionnement.

Ainsi, pendant le déplacement dudit véhicule, l'application de ladite base d'appui et dudit disque contre le sol est assuré par lesdits moyens d'actionnement reliant lesdites parties fixe et mobile. Par ailleurs, puisque la base d'appui de la machine s'applique sur le sol (revêtement en asphalte) et encadre étroitement le disque rotatif, la matière du revêtement est empêchée de s'évacuer vers l'extérieur et est amenée à se comprimer dans le fond et dans les parois latérales de la rainure créée par l'action du segment périphérique du disque, faisant saillie de la base et engagé dans le sol. De plus, le disque ne travaille pas comme un disque de coupe usuel entraînant une évacuation de la matière vers l'extérieur, mais comme un disque pénétrant dans la matière pour la forcer à se comprimer sans la refouler extérieurement grâce à la base d'appui, de façon à obtenir la rainure. Le disque rotatif constitue un "modèle" permettant de réaliser, après son passage, une "empreinte" dans le sol, correspondant à ladite rainure, qui n'est donc pas à proprement parler une ligne de coupe. Une telle rainure peut présenter une largeur de quelques millimètres et une profondeur de quelques centimètres.

Par conséquent, la machine selon l'invention n'engendre pas de dépôts extérieurs et permet d'obtenir une rainure parfaitement nette, dans laquelle peuvent être déposés des câbles optiques par exemple.

De préférence, ledit disque présente un bord périphérique continu, dépourvu de dents, ce qui contribue à garantir une excellente longévité au disque.

Avantageusement, au moins un vibrateur est associé audit disque, de façon à aider l'action de pénétration de ce dernier dans le sol.

De plus, ledit espace longitudinal est de préférence prévu sensiblement au milieu de ladite base d'appui.

Selon un premier exemple de réalisation, ladite base d'appui peut être constituée par un patin apte à s'appliquer sur le sol, et présentant une fente qui correspond audit espace longitudinal pour le passage dudit disque rotatif.

Selon un second exemple de réalisation, ladite base d'appui peut être constituée par deux chenilles jumelées aptes à s'appliquer sur le sol, et espacées parallèlement l'une de l'autre d'une distance correspondant audit espace longitudinal pour le passage dudit disque rotatif.

Selon d'autres caractéristiques, la machine comprend :
- des moyens pour régler la profondeur de la rainure réalisée par le disque rotatif, par déplacement relatif de la base d'appui par rapport à un support portant ledit disque ; et
- des moyens pour régler la force de pénétration dudit disque dans le sol, par rapport à ladite base d'appui.

Les figures du dessin annexé feront bien comprendre comment l'invention peut être réalisée. Sur ces figures, des références identiques désignent des éléments semblables.

La figure 1 représente un véhicule équipé d'une machine conforme à l'invention.

La figure 2 est une vue en plan partiellement écorchée, de la machine illustrée sur la figure 1, en cours de réalisation d'une rainure.

La figure 3 est une vue de dessus de la machine illustrée sur la figure 2.

La figure 4 illustre, en coupe transversale agrandie, l'action du disque dans le revêtement pour obtenir la rainure, conformément à la présente invention.

La figure 5 représente le véhicule de la figure 1 équipé d'une machine selon une variante de réalisation.

Les figures 6 et 7 sont respectivement des vues en plan et de dessus de la machine illustrée sur la figure 5.

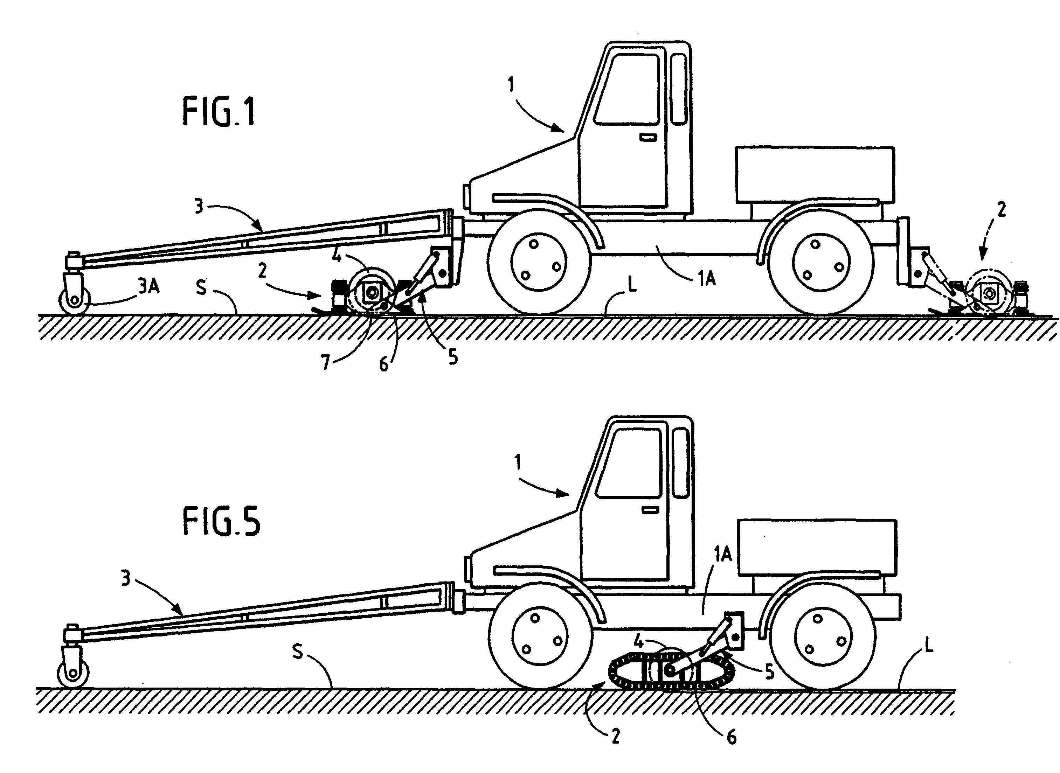

Le véhicule 1 représenté sur la figure 1 est équipé d'une machine 2 permettant la réalisation, dans le sol S, d'une rainure L. Dans cet exemple, la machine 2 est montée fixe à l'avant du châssis 1A du véhicule, mais elle pourrait être agencée à l'arrière du châssis comme le montre la représentation en traits mixtes. Pour faciliter le guidage du véhicule moteur 1 et, ainsi, permettre une réalisation rigoureuse de la rainure L, un dispositif d'aide 3 au contrôle de la trajectoire souhaitée est attelé à l'avant du châssis 1A, ledit dispositif 3 portant une roue pivotante 3A à son extrémité libre.

La machine 2 comprend un disque 4 relié à un châssis 5 de la machine, lequel est fixé au châssis 1A du véhicule. Selon l'invention, la machine 2 est munie d'une base d'appui 6 s'appliquant contre le sol S, tel que le revêtement en asphalte d'une route. Cette base 6 est agencée orthogonalement au plan du disque, généralement vertical. Elle est pourvue d'un espace longitudinal 7, qui est parallèle au plan du disque, pour qu'un segment SD de ce dernier fasse saillie sous la base pour permettre de réaliser la rainure L et dont les bords latéraux délimitant ledit espace sont avantageusement situés à proximité des faces latérales 4A du disque.

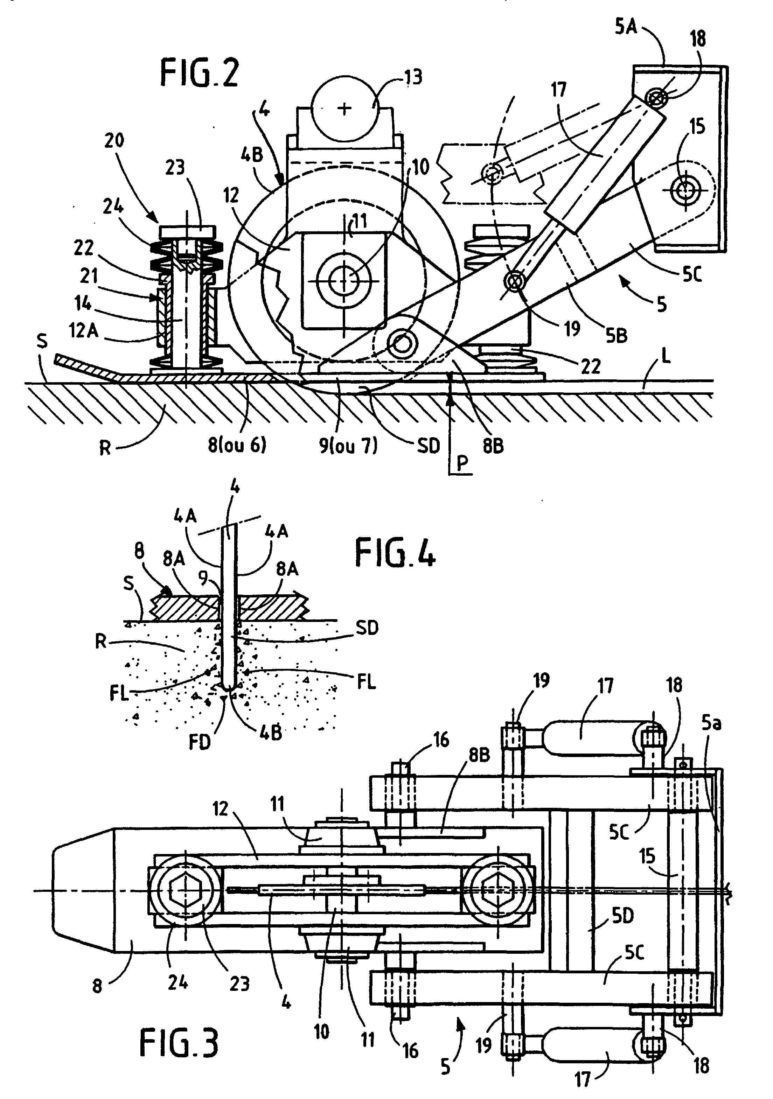

Dans le mode de réalisation illustré sur les figures 2 à 4, la base d'appui 6 est conformée en patin 8 (ou semelle) pourvu d'une fente longitudinale, médiane 9, qui fait office d'espace longitudinal précité 7. On voit, sur les figures 2 et 3, que le segment SD du disque 4 traverse la fente 9 pour émerger sous le patin d'une hauteur correspondant à la profondeur P de la rainure. On remarque notamment, sur la figure 4, que les bords latéraux 8A délimitant la fente 9 sont sensiblement à fleur des faces latérales 4A du disque, de sorte qu'un tel agencement empêche la remontée des déblais occasionnés par la réalisation de la rainure, forçant la matière à se comprimer.

Par ailleurs, le disque 4 est associé, de façon amovible, à un arbre 10 monté libre en rotation autour de son axe et logé à ses extrémités dans des paliers 11. Ces derniers sont liés à un support 12 qui porte ainsi l'ensemble disque-arbre. Le bord périphérique 4B du disque est en outre dépourvu de dents. L'entraînement en rotation du disque s'effectue par son contact avec le sol. Pour faciliter la pénétration du disque dans le sol, un vibrateur 13 du type hydraulique par exemple, est prévu sur le support 12. Celui-ci est monté sur deux tiges 14 dressées perpendiculairement sur le patin et liées à celui-ci, lesdites tiges étant situées respectivement à l'avant et à l'arrière du patin, dans le plan du disque en encadrant ce dernier.

Concernant le châssis 5 de la machine, il se compose d'une partie 5A qui est fixée à l'avant 1A du véhicule, et d'une partie mobile 5B, articulée à la partie fixe 5A. En particulier, la partie fixe 5A se présente sous la forme d'un U entre les ailes duquel sont montés deux bras parallèles, latéraux 5C de la partie mobile autour d'un axe d'articulation 15 parallèle à l'arbre 10 portant le disque. A l'opposé de leur liaison à la partie fixe, les bras latéraux 5C sont reliés à des ferrures respectives 8B du patin autour d'un axe d'articulation 16, parallèle à l'axe d'articulation 15. Au moins une traverse 5D relie fixement les deux bras pour rigidifier la partie mobile 5B du châssis.

Pour appliquer avec pression le patin 8 et le disque 4 contre le sol, on a prévu des organes d'actionnement tels que des vérins 17. Ces organes d'actionnement sont agencés respectivement de part et d'autre du châssis 5 et ils sont reliés d'un côté à la partie fixe 5A du châssis par des axes 18 et, de l'autre côté, aux bras latéraux 5C de la partie mobile 5B, par des axes 19. Comme le montre la figure 2, la partie mobile 5B du châssis occupe une position abaissée correspondant à la sortie des tiges des vérins, de sorte que le patin et le disque s'appliquent fermement sur le revêtement à couper. La position relevée de la partie mobile du châssis, par suite de la rentrée des tiges des vérins, est illustrée partiellement en traits mixtes sur la figure 2.

Par ailleurs, la machine est également équipée de moyens 20 pour régler la force de pénétration du disque 4 dans le sol et de moyens 21 pour régler la profondeur de la rainure L à obtenir. Dans ce mode de réalisation, ces moyens sont prévus au niveau des tiges 14 sur lesquelles est monté le support 12 du disque 4. Ainsi, une bague filetée 22 est agencée entre chaque tige et un passage interne correspondant 12A du support, si bien qu'une action sur ces deux bagues 22 formant écrous entraîne un déplacement relatif entre le patin 8 et le support 12 et, donc, une saillie variable du segment du disque SD en accord avec la profondeur P souhaitée pour la rainure. Une vis 23 est de plus vissée dans l'extrémité libre supérieure de chaque tige 14 et des éléments élastiques 24, tels que des rondelles élastiques du type "Belleville", sont disposés autour de la tige, notamment entre la bague de réglage de profondeur 22 et la vis 23. Ces vis 23 permettent de comprimer plus ou moins les rondelles élastiques 24 et, donc, agissent sur la force de pénétration du disque dans le revêtement par rapport au patin au contact de celui-ci.

Le fonctionnement de la machine 2, montée à l'avant ou à l'arrière du châssis du véhicule, est le suivant.

La machine 2 occupe la position indiquée sur les figures 1 et 2, pour laquelle le patin 8 et le disque 4 sont pressés contre le revêtement R sous l'action des vérins 17, reliés par ailleurs à des accumulateurs de pression non représentés et permettant un appui efficace du patin sur le revêtement R du sol. Les réglages relatifs à la profondeur souhaitée pour la rainure et à l'effort de pénétration du disque dans le sol sont en outre réalisés.

Par suite de l'avance du véhicule 1, guidé par le dispositif d'aide 3, le disque 4 est entraîné en rotation par son contact (frottement) avec le sol au niveau de son segment SD qui fait saillie sous le patin 8, en ouvrant une rainure L. L'actionnement du vibrateur 13 participe aussi activement à l'engagement du segment SD du disque dans le sol. Comme le montre plus particulièrement la figure 4, la matière constituant le revêtement de la route, telle que de l'asphalte, est forcée à se comprimer par l'action des faces latérales 4A et du bord périphérique 4B du disque, et par la présence des bords latéraux 8A de la fente, proches des faces 4A, et qui empêchent la matière de s'évacuer (ou d'être refoulée) vers l'extérieur. Ainsi, celle-ci se comprime (se tasse) progressivement dans le fond FD et dans les faces latérales FL de la rainure L au fur et à mesure de l'avance du véhicule 1. On obtient alors, à l'arrière de la machine après le passage du disque, une rainure L parfaitement nette, sans dépôts extérieurs à récupérer et prête pour la pose d'objets allongés, tels que des câbles optiques. La section de la rainure L correspond alors sensiblement à la section du segment actif SD du disque pénétrant dans le revêtement. De plus, de par la nature du matériau, le disque de coupe ne s'use pratiquement pas.

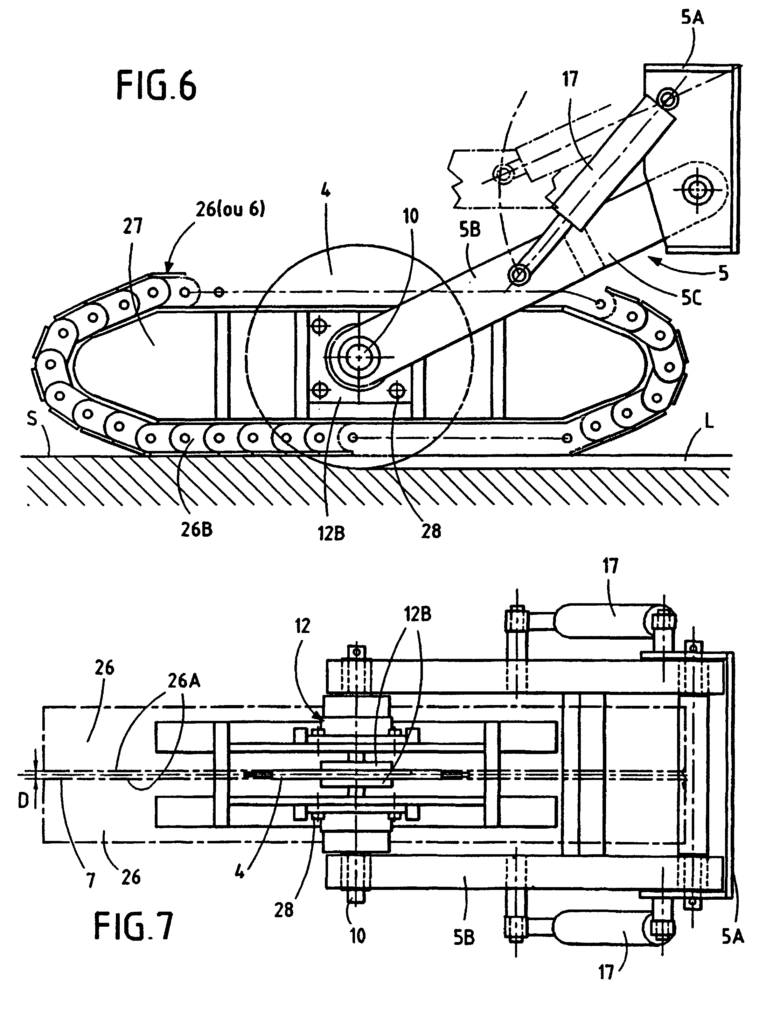

Dans une variante de réalisation de la machine, illustrée sur les figures 6 et 7, la base d'appui 6 est définie à partir de deux chenilles jumelées 26, disposées parallèlement l'une de l'autre et respectivement de part et d'autre dudit disque 4. La distance D, séparant les bords internes en regard 26A des brins inférieurs 26B des deux chenilles 26, correspond à l'espace longitudinal précité 7, permettant le libre passage du disque entre les chenilles. Cette distance D est relativement proche de l'épaisseur du disque, si bien que, là aussi, la matière en cours de creusage ne peut s'évacuer vers l'extérieur, comme dans le cas du patin 8 à fente 9.

Le châssis 5 de la machine 2 est analogue à celui précédemment décrit, à l'exception que les extrémités libres des bras 5C portent les extrémités de l'arbre 10 dudit disque 4. Les bâtis 27 sur lesquels circulent les chenilles 26, sont fixés à des plaques 12B du support 12 portant l'arbre 10 et le disque 4, par des vis 28. Les supports peuvent coulisser relativement sur les bâtis 27 pour permettre le réglage en profondeur de la rainure à réaliser.

Le véhicule 1 illustré sur la figure 5 est équipé de la machine 2 à chenilles 26 ci-dessus décrite, qui est fixée, par exemple, sous le châssis 1A du véhicule entre les deux essieux.

A titre d'exemple, la rainure réalisée peut avoir 25 mm de profondeur sur 10 mm de large.

Par ailleurs, le véhicule 1 représenté sur les figures 1 et 5 peut être équipé d'un touret autour duquel est enroulé le câble à poser et permettant, après la réalisation de la rainure, la pose du câble dans celle-ci. Dans ce cas, une trémie à sable et une chaudière à brai peuvent être également associées au véhicule pour recouvrir la rainure après la pose du câble. Ainsi, on peut réaliser à partir d'un même véhicule, la rainure, la pose de câbles et le recouvrement de la rainure. En amont de la machine 2, peut être aussi montée, sous le châssis du véhicule, une brosse rotative permettant de nettoyer au mieux le revêtement avant le passage de la machine.

## Revendications

1. Machine pour réaliser des rainures dans le sol, ladite machine comportant
- un châssis (5) se composant d'une partie fixe (5A) et d'une partie mobile (5B), reliées l'une à l'autre ;
- un disque rotatif (4), monté libre en rotation sur ladite partie mobile (5B) dudit châssis (5), l'entraînement en rotation dudit disque (4) étant assuré par le contact de celui-ci avec le sol lorsque ladite machine se déplace ; et
- une base d'appui (6) montée sur ladite partie mobile (5B),
**caractérisée en ce que** :
- ladite partie fixe (5a) est apte à être fixée au châssis (1A) d'un véhicule (1) ;
- lesdites parties fixe (5A) et mobile (5B) sont articulées l'une à l'autre et reliées par des moyens d'actionnement (17) permettant à ladite partie mobile (5B) de prendre par rotation soit une position abaissée, soit une position relevée ;
- ladite base d'appui (6) est disposée orthogonalement au plan dudit disque et est pourvue d'un espace longitudinal (7) à travers lequel peut passer un segment dudit disque (4) pour réaliser ladite rainure, les bords latéraux dudit espace longitudinal (7) étant proches des faces latérales (4A) dudit disque et ladite base d'appui (6) empêchant l'évacuation de la matière de la rainure vers l'extérieur ; et
- en position abaissée de ladite partie mobile, ladite base d'appui (6) et ledit disque (4) sont appliqués avec pression contre le sol par l'action desdits moyens d'actionnement (17).

2. Machine selon la revendication 1,
**caractérisée en ce que** ledit disque (4) présente un bord périphérique continu (4B), dépourvu de dents.

3. Machine selon l'une des revendications 1 ou 2,
**caractérisée en ce qu'**au moins un vibrateur (13) est associé audit disque (4).

4. Machine selon l'une quelconque des revendications 1 à 3,
**caractérisée en ce que** ledit espace longitudinal (7) est prévu sensiblement au milieu de ladite base d'appui (6).

5. Machine selon l'une quelconque des revendications 1 à 4,
**caractérisée en ce que** ladite base d'appui (6) est constituée par au moins un patin (8), apte à s'appliquer sur le sol et présentant une fente (9) qui correspond audit espace longitudinal (7) pour le passage dudit disque rotatif (4).

6. Machine selon l'une quelconque des revendications 1 à 4,
**caractérisée en ce que** ladite base d'appui (6) est constituée par deux chenilles jumelées (26), aptes à s'appliquer sur le sol et espacées parallèlement l'une de l'autre d'une distance correspondant audit espace longitudinal (7) pour le passage dudit disque rotatif (4).

7. Machine selon l'une quelconque des revendications 1 à 6,
**caractérisée en ce qu'**elle comprend des moyens (21) pour régler la profondeur de la rainure réalisée par le disque rotatif, par déplacement relatif de la base d'appui par rapport à un support portant ledit disque.

8. Machine selon l'une quelconque des revendications 1 à 7,
**caractérisée en ce qu'**elle comprend des moyens (20) pour régler la force de pénétration dudit disque dans le sol, par rapport à ladite base d'appui.

## Patentansprüche

1. Maschine zum Ausführen von Furchen im Boden, wobei die besagte Maschine umfasst:
- ein Chassis (5), welches aus einem festen Teil (5A) und einem beweglichen Teil (5B) besteht, die beide miteinander verbunden sind;
- einer Drehscheibe (4), welche frei beweglich auf das bewegliche Teil (5B) des Chassis (5) montiert ist, wobei das Versetzen der Scheibe (4) in Rotation durch den Kontakt derselben mit dem Boden gewährleistet wird, wenn sich die Maschine bewegt; und
- eine Stützbasis (6), die an das bewegliche Teil (5B) montiert ist,
**dadurch gekennzeichnet, dass**:
- das feste Teil (5a) dazu geeignet ist, am Fahrgestell (1A) eines Fahrzeugs (1) befestigt zu werden;
- das feste Teil (5A) und das bewegliche Teil (5B) zueinander gelenkig angeordnet und mit Betätigungsmitteln (17) verbunden sind, welche ermöglichen, dass das bewegliche Teil (5B) durch Drehung entweder eine abgesenkte oder eine angehobene Stellung einnimmt;
- die Stützbasis (6) orthogonal zur Ebene der Scheibe angeordnet ist und einen Längszwischenraum (7) aufweist, durch welchen ein Segment der Scheibe (4) treten kann, um die Furche auszuführen, wobei die Seitenränder des Längszwischenraums (7) dicht an den Seitenflächen (4A) der Scheibe liegen, und die Stützbasis (6) das Austragen des Materials der Furche nach außen verhindert; und
- in der abgesenkten Stellung des beweglichen Teils die Stützbasis (6) und die Scheibe (4) mit Druck gegen den Boden durch die Wirkung der Betätigungsmittel (17) gedrückt werden.

2. Maschine nach Anspruch 1, **dadurch gekennzeichnet, dass** die Scheibe (4) einen kontinuierlichen, nicht mit Zähnen bestückten Umfangsrand (4B) aufweist.

3. Maschine nach einem der Ansprüche 1 oder 2, **dadurch gekennzeichnet, dass** mindestens ein Vibrator (13) mit der Scheibe (4) verbunden ist.

4. Maschine nach einem der Ansprüche 1 bis 3, **dadurch gekennzeichnet, dass** der Längszwischenraum (7) etwa in der Mitte der Stützbasis (6) ausgeführt ist.

5. Maschine nach einem der Ansprüche 1 bis 4, **dadurch gekennzeichnet, dass** die Stützbasis (6) aus mindestens einer Kufe (8) besteht, die geeignet ist, auf dem Boden aufzusitzen, und die einen Schlitz (9) aufweist, der dem Längszwischenraum (7) für den Durchgang der Drehscheibe (4) entspricht.

6. Maschine nach einem der Ansprüche 1 bis 4, **dadurch gekennzeichnet, dass** die Stützbasis (6) aus zwei Doppelraupen (26) besteht, die geeignet sind, auf dem Boden aufzusitzen, und die parallel zueinander angeordnet sind und voneinander einen Abstand haben, der dem Längszwischenraum (7) für den Durchgang der Drehscheibe (4) entspricht.

7. Maschine nach einem der Ansprüche 1 bis 6, **dadurch gekennzeichnet, dass** sie Mittel (21) zum Einstellen der Tiefe der von der Drehscheibe ausgeführten Furche durch die relative Verschiebung der Stützbasis in Bezug auf einen die Scheibe tragenden Träger aufweist.

8. Maschine nach einem der Ansprüche 1 bis 7, **dadurch gekennzeichnet, dass** sie Mittel (20) zum Einstellen der Eindringkraft der Scheibe in den Boden in Bezug auf die Stützbasis aufweist.

## Claims

1. Machine for making grooves in the ground, said machine comprising:
- a chassis (5) made up of a fixed part (5A) and of a moving part (5B) which are connected to each other;
- a rotary disc (4) mounted so that it can rotate freely on the said moving part (5B) of the said chassis (5), the rotational driving of the said disc (4) being performed by contact between this disc and the ground when the said machine moves along; and
- a base plate (6) mounted on the said moving part (5B),
**characterized in that**:
- the said fixed part (5A) is able to be fixed to the chassis (1A) of a vehicle (1);
- the said fixed (5A) and moving (5B) parts are articulated to one another and connected by actuating means (17) allowing the said moving part (5B) through rotating to adopt either a lowered position or a raised position;
- the said base plate (6) is arranged at right angles to the plane of the said disc and is provided with a longitudinal space (7) through which a segment of the said disc (4) can pass in order to make the said groove, the lateral edges of the said longitudinal space (7) being close to the lateral faces (4A) of the said disc and the said base plate (6) preventing material from the groove from being evacuated outwards; and
- when the said moving part is in the lowered position, the said base plate (6) and the said disc (4) are pressed against the ground by the action of the said actuating means (17).

2. Machine according to Claim 1, **characterized in that** the said disc (4) has a continuous peripheral edge (4B) devoid of teeth.

3. Machine according to either of Claims 1 and 2, **characterized in that** at least one vibrator (13) is associated with the said disc (4).

4. Machine according to any one of Claims 1 to 3, **characterized in that** the said longitudinal space (7) is made more or less in the middle of the said base plate (6).

5. Machine according to any one of claims 1 to 4, **characterized in that** the said base plate (6) consists of at least one shoe (8) capable of pressing on the ground and having a slot (9) which corresponds to the said longitudinal space (7) for the passage of the said rotary disc (4).

6. Machine according to any one of Claims 1 to 4, **characterized in that** the said base plate (6) consists of two twin tracks (26) which can press down on the ground and are spaced apart parallel to one another by a distance that corresponds to the said longitudinal space (7) for the passage of the said rotary disc (4).

7. Machine according to any one of Claims 1 to 6, **characterized in that** it comprises means (21) for adjusting the depth of the groove made by the rotary disc, by relative displacement of the base plate with respect to a support bearing the said disc.

8. Machine according to any one of Claims 1 to 7, **characterized in that** it comprises means (20) for adjusting the force with which the said disc penetrates the ground, with respect to the said base plate.
